# EUROPEAN PATENT SPECIFICATION

(11) **EP 3 287 607 B1**
(45) Date of publication and mention of the grant of the patent: **19.06.2019**
(21) Application number: 17173799.2
(22) Date of filing: 31.05.2017
(51) Int. Cl.: F01D 17/00, F01D 17/16

(54) **VANE ACTUATOR AND METHOD OF MAKING AND USING THE SAME**
SCHAUFELAKTUATOR UND VERFAHREN ZUR HERSTELLUNG UND VERWENDUNG DAVON
ACTIONNEUR À PALETTES ET SON PROCÉDÉ DE FABRICATION ET D'UTILISATION

(30) Priority: 23.08.2016 US 201615244469
(43) Date of publication of application: 28.02.2018
(73) Proprietor: Borgwarner Inc., Auburn Hills, Michigan 48326 (US)
(72) Inventor: KARAMAVRUC, Aliihsan, Fletcher, NC 28732 (US); ROTH, Roland, Arden, NC 28704 (US); KIEFER, Clément, 57970 Basse-Ham (FR)
(74) Representative: Peterreins Schley

(56) References cited:
- EP-A2- 2 573 363
- WO-A1-2013/116136
- WO-A1-2014/107270
- WO-A1-2015/080920

## Description

### TECHNICAL FIELD

The field to which the disclosure generally relates is vane actuators for turbomachines.

### BACKGROUND

In a number of variations, a turbocharger may include a turbine comprising a plurality of vanes. WO2013116136A1 discloses a turbocharger with a guide apparatus for regulating a flow of exhaust gas through a wheel inlet. The guide apparatus comprises an upper vane ring, a lower vane ring and a plurality of guide vanes. A plurality of actuator blocks of a control ring interact with vane forks of pivot shafts of the guide vanes to cause the plurality of guide vanes to rotate. WO2014107270A1 discloses a vane pack assembly for a variable turbine geometry turbocharger which includes a plurality of guide vanes between an upper vane ring and a lower vane ring. Each of the plurality of guide vanes comprises an actuation post via which an adjustment ring rotates and slides the plurality of guide vanes around respective vane studs.

### SUMMARY OF ILLUSTRATIVE VARIATIONS

According to the invention a turbomachinery product is provided comprising the features of claim 1.

Further, according to the invention a method is provided with the features of claim 5.

Other illustrative variations within the scope of the invention will become apparent from the detailed description provided hereinafter. It should be understood that the detailed description and specific examples, while disclosing variations within the scope of the invention, are intended for purposes of illustration only and are not intended to limit the scope of the invention.

### BRIEF DESCRIPTION OF THE DRAWINGS

Select examples of variations within the scope of the invention will become more fully understood from the detailed description and the accompanying drawings, wherein:
FIG. 1 illustrates a sectional perspective view of a product according to a number of variations.
FIG. 2A illustrates a sectional perspective view of a product according to a number of variations.
FIG. 2B illustrates a sectional perspective view of a product according to a number of variations.
FIG. 2C illustrates a radial perspective cross-sectional view of a product according to a number of variations.
FIG. 2D illustrates a sectional perspective view of a product according to a number of variations.
FIG. 3A illustrates an axial cross-sectional view of a product according to a number of variations.
FIG. 3B illustrates a sectional perspective view of a product according to a number of variations.
FIG. 3C illustrates a sectional perspective view of a product according to a number of variations.
FIG. 4A illustrates a sectional perspective view of a product according to a number of variations.
FIG. 4B illustrates an axial cross-sectional view of a product according to a number of variations.
FIG. 4C illustrates an axial cross-sectional view of a product according to a number of variations.
FIG.4D illustrates a radial cross-sectional view of a product according to a number of variations.
FIG. 4E illustrates a sectional perspective view of a product according to a number of variations.
FIG. 4F illustrates a sectional perspective view of a product according to a number of variations.

### DETAILED DESCRIPTION OF ILLUSTRATIVE VARIATIONS

The following description of the variations is merely illustrative in nature and is in no way intended to limit the scope of the invention, its application, or uses.

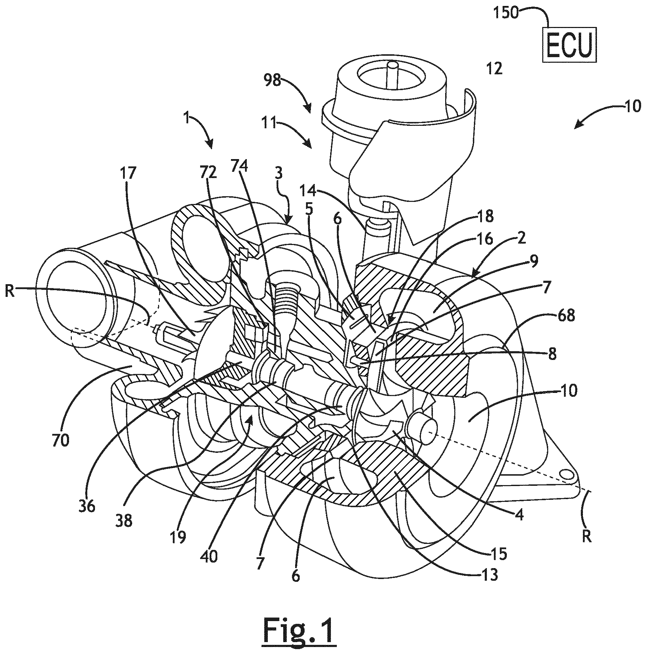

Referring to FIG. 1, in a number of variations, a product 10 is shown. In a number of variations, the product 10 includes a turbomachinery device 10. In a number of variations, the turbomachinery device may be a device that includes a high speed machine that includes a rotor and a fluid and transfers energy from a fluid to a rotor or vice versa. In a number of variations, the turbomachinery device 10 may include at least one of a turbocharger, an electrified turbocharger, a compressor, a turbine, an expansion device, an organic rankine cycle (ORC) device, a motor used in turbomachinery, a booster, an electrified booster, an electrified turbo compound component, or may be another device. In a number of non-limiting variations, as shown in FIG. 1, the product 10 may include a turbocharger 1. In a number of variations, the product 10 or turbocharger 1 may include at least one of a turbine 68 and/or at least one compressor 70, a variation of which is illustrated in FIG. 1. In a number of variations, the product 10 or turbocharger 1 or turbine 68 may comprise a turbine wheel or rotor 4. In a number of variations, the turbocharger 4 or turbine 68 may have variable turbine geometry (VTG). In a number of variations, the product 10 or turbocharger 1 or compressor 70 may comprise a compressor wheel or rotor 17. In a number of variations, the turbine wheel or rotor 4 may be operatively connected to a compressor wheel or rotor 17 through a shaft 36. In a number of variations, the turbine wheel 4 may receive thermodynamic power from exhaust gas from the system and may drive the shaft 36 which may then drive the compressor wheel 17. In a number of variations, the shaft 36 may be supported for rotation by at least one bearing 38, 40. In a number of variations, the product 10 or turbocharger 1 may include a first bearing 38 and a second bearing 40. In a number of variations, the product 10 or turbocharger 1 may include a turbine housing 2 and a compressor housing 3 which may be connected to it via a bearing housing 19. In a number of variations, the product 10 may include a bearing lubrication system 72. In a number of variations, a fluid 74 may be provided to the first and second bearings 38, 40 through the bearing lubrication system 72 in order to ensure proper rotation of the shaft 36. In a number of variations, the fluid 74 may include oil, coolant, or may be another type.

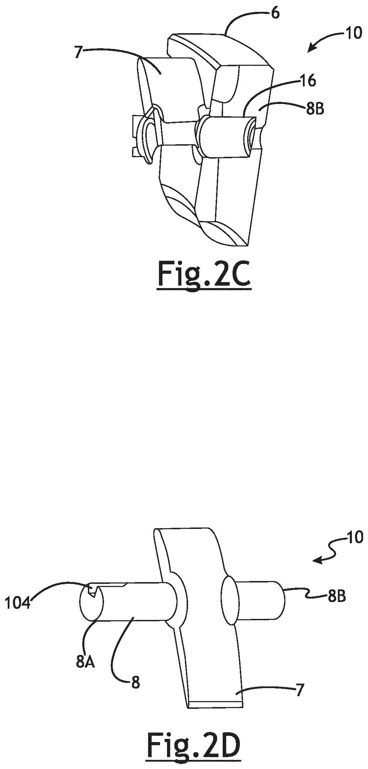

Still referring to FIG. 1, in a number of variations, the housings 2, 3 and 19 may be arranged along a rotational axis R. In the non-limiting example shown in FIG. 1, the turbine housing 2 is shown partially in section in order to illustrate the arrangement of a lower ring 6 as part of a radially outer vane cascade 18 which may have a plurality of vanes 7, with pivots or vane posts 8, which may be distributed over the circumference. In a number of variations, a vane 7 may include an individual vane post 8 which may actuate the vane 7 into an "open" or "closed" position. In a number of variations, as shown in FIG. 2D, the vane post 8 may have a first end 8A and a second end 8B. As a result of this, in a number of variations, nozzle cross sections may be formed which, depending upon the position of the vanes 7, may be larger or smaller and may expose the turbine rotor 4, which may be mounted in the middle on the rotational axis R, to a greater or lesser extent to the action of the exhaust gas of an engine. In a number of variations, an "open" position may be defined as allowing gas through the vane cascade 18 via an opening created by actuation of the vane 7. In a number of variations, a "closed" position may be defined as allowing no gas through the vane cascade 18 via an opening created by actuation of the vane 7. In a number of variations, the exhaust gas of an engine may be fed via a feed passage 9 and may be discharged via a central duct 10 in order to drive a compressor rotor 17, which may be seated upon the same shaft 36, via the turbine rotor 4.

In a number of variations, in order to control the movement or the position of the vanes 7, the product 10 or turbocharger 1 may include an operating device 11 which may include a vane actuator 98. In a number of variations, the operating device 11 may include and ECU 150 which may operate the movement or position of the vanes 7 based on conditions within the product 10 or its surroundings or applications of the product 10. In a number of variations, the operating device 11 may include a control housing 12 which may control movement of a ram component 14 which may be fastened to it, in order to convert its movement onto a vane upper ring 5, which may be located behind the vane lower ring 6. In a number of variations, the vane cascade 18 or vanes 7 may be located between the upper ring 5 and the lower ring 6. In a number of variations, the vane cascade 18 or at least one vane 7 may be mechanically coupled to at least one of the upper ring 5 or the lower ring 6. In a number of variations, the vane cascade 18 or at least one vane 7 may be mechanically coupled to the upper ring 5 and the lower ring 6. In a number of variations, the vane cascade 18 or at least one vane 7 may be mechanically coupled to at least one of the upper ring 5 or the lower ring 6 through the vane post 8. In a number of variations, the vane cascade 18 or at least one vane 7 may be mechanically coupled to the upper ring 5 and the lower ring 6 through the vane post 8. In a number of variations, the vane cascade 18 or at least one vane 7 may be mechanically coupled to the upper ring 5 and the lower ring 6 through the vane post 8 where the vane post first end 8A mechanically couples the upper ring 5 and the vane post second end 8B mechanically couples the lower ring 6. In a number of variations, the vane actuator 98 may include an actuator ring 100. In a number of variations, the vane actuator 98 may move or rotate the actuator ring 100. In a number of variations, the vane actuator 98 may include a plurality of actuator rings 100. In a number of variations, the vane actuator 98 may include the vane cascade 18 and plurality of vanes 7. In a number of variations, the actuator ring 100 may be between the vane cascade 18 and the upper ring 5. In a number of variations, the actuator ring 100 may be between the vane cascade 18 and the lower ring 6. In a number of variations, the actuator ring 100 may be on the outside of the upper ring 5. In a number of variations, the actuator ring 100 may be on the outside of the lower ring 6. In a number of variations, the vane cascade 18 or at least one vane 7 may be mechanically coupled the actuator ring 100 through the vane post 8 on the first end 8A, second end 8B or at another point. In a number of variations, the control housing **12** may control the movement of a ram component **14** which may be fastened to it, in order to convert its movement onto the actuator ring 100 and subsequently into an actuation of the vane cascade 19 or at least one vane 7 to an "open" or "closed" position, based on free movement of the actuator ring 100. In a number of variations, a free space 13 for the vanes 7 may be formed between the vane bearing ring 6 and an annular section 25 of the turbine housing 2. In order to be able to safeguard this free space 13, the lower ring 6 may have spacers 16 which may be formed in one piece. In a non-limiting exemplary case, three spacers 26 may be arranged on the circumference of the vane bearing ring 6 with an angular spacing of 120° in each case. In principle, however, it may be possible to provide such spacers 26 in a greater or lesser number.

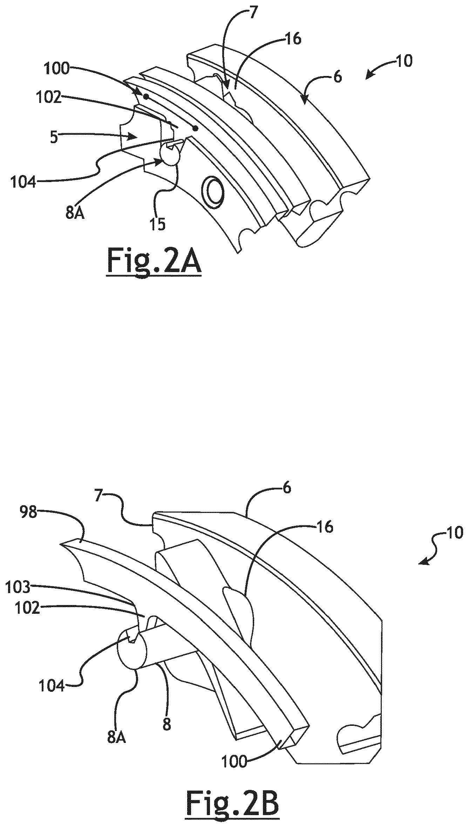

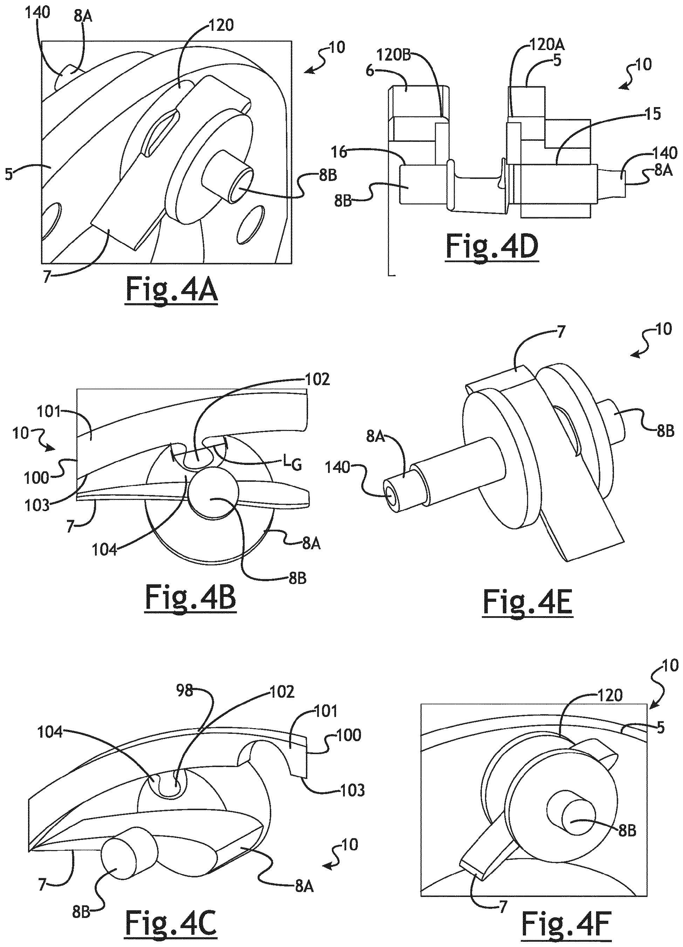

In a number of variations, as shown in FIGs. 2A-2D, the vane may be between the lower ring 6 and the upper ring 5. In a number of variations, as shown in Fig. 2A, the actuator ring 100 may be between at least one vane 7 and the upper ring 5. In a number of variations, as shown in FIG. 2D, the vane post 8 may have a first end 8A and a second end 8B. As illustrated in FIGs. 2A and 2C, in a number of variations, the vane post first end 8A may mechanically couple to the upper ring 5 and the lower post 8B may mechanically couple to the lower ring 6. In a number of variations, as shown in FIGs. 2A, 3A, 4A, 4D, and 4F, the upper ring 5 may include an upper ring bore 15. In a number of variations, as shown in FIGs. 2A, 3A, 4A, 4D, and 4F, the first end 8A of the vane post 8 may fit into and mechanically couple to the upper ring bore 15 of the upper ring 5. In a number of variations, as shown in FIGs. 2A, 2B, 2C, 3B, 3C, 4D, the lower ring 6 may include a lower ring bore 16. In a number of variations, as shown in FIGs. 2A, 2B, 3B, 3C, and 4D, the second end 8B of the vane post 8 may fit into and mechanically couple to the lower ring bore 16 of the lower ring 6. In a number of variations, as shown in FIGS. 2A-2D, the vane post 8 may include at least one groove 104. In a number of variations, the vane post 8 may include a groove 104 along a longitudinal side of the first end 8A. In a number of variations, the vane post 8 may include a groove 104 along a longitudinal side of the second end 8B. In a number of variations, the actuator ring 100 may include at least one spline 102. In a number of variations, as shown in Fig. 2A, 2B, 4B, and 4C, the actuator ring 8 may include at least one spline 102 along a radial edge 103 of the actuator ring 8. In a number of variations, as shown in FIGS. 2A-2B, the spline 102 of the actuator ring 100 may mechanically couple to the groove 104 of the vane post 8. In a number of variations, this may mechanically couple the actuator ring 100 to the vane 7. In a number of variations, movement or rotation of the actuator ring 100 may move or rotate the at least one spline 102 which may in turn move or rotate the groove 104 of the vane post 8 which may move or rotate the vane 7 from an "open" position to a "closed" position and vice versa. In a number of variations, the actuator ring 100 may include a plurality of splines 102 mechanically coupled to a plurality of grooves 104 on individual vane posts 8 such that the actuator ring 100 may be mechanically coupled to a plurality of vanes 7. In a number of variations, each of the grooves 104 in the vane posts 8 may be mechanically coupled to at least one spline 102 of the actuator ring 100. In a number of variations, the actuator ring 100 may be constructed and arranged to operate a plurality of vanes uniformly based on movement of the actuator ring 100. In a number of variations, the movement of the actuator ring 100 that actuates the vanes 7 may be rotational in a clockwise or counterclockwise direction where one direction "opens" the vanes and the other direction "closes" the vanes. In a number of variations, as shown in Fig. 4B-4C, the spline 102 may be in the shape of a dogbone. In a number of variations, the groove 104 may have a wider length L_{G} to accommodate the dogbone shape. In a number of variations, a dogbone shape may reduce friction and stress between the vanes 7 and the actuator ring 100 during operation.

In a number of variations, as illustrated in Fig. 4A, 4D, 4E, and 4F, the vane 7 may include a buffer region 120 between the vane post 8 and the vane 7. In a number of variations, as shown in FIG. 4A, 4D, and 4F, the buffer region 120 may abut an axial surface of the upper ring 5 up to the vane post first end 8A as it accepted in the upper ring bore 15. In a number of variations, as shown in FIG. 4A, the buffer region 120A may be accepted at least partially into the upper ring bore 15. In a number of variations, as shown in FIG. 4D, the buffer region 120A may abut an axial surface of the lower ring 6 up to the vane post second end 8B as it accepted in the lower ring bore 16. In a number of variations, as shown in FIG. 4D, the buffer region 120B may be accepted at least partially into the lower ring bore 16. In a number of variations, as shown in FIG. 4D, the vane 7 may have dual buffer regions 120A, 120B, which may be accepted at least partially into the upper ring bore 15 and lower ring bore 16 respectively. In a number of variations, as shown in FIG. 4A, 4D, and 4E, the vane post first end 8A may project out through the upper ring bore 15. In a number of variations, as shown in FIG. 4E, the vane post first end 8A may include a vane post bore 140. In a number of variations, the actuator ring 100 may include at least one axial face spline (not shown) projecting outward from an axial surface 101 of the actuator ring 100. In a number of variations, the axial face spline of the actuator ring 100 may mechanically couple to the vane post bore 140 of the vane post 8. In a number of variations, this may mechanically couple the actuator ring 100 to the vane 7. In a number of variations, movement or rotation of the actuator ring 100 may move or rotate the at least one axial face spline which may in turn move or rotate the vane post bore 140 of the vane post 8 which may move or rotate the vane 7 from an "open" position to a "closed" position and vice versa. In a number of variations, the actuator ring 100 may include a plurality of axial face splines mechanically coupled to a plurality of vane post bores 140 on individual vane posts 8 such that the actuator ring 100 may be mechanically coupled to a plurality of vanes 7. In a number of variations, the axial face spline may include a key. In a number of variations, the vane post bore 140 may include a grooved interior to accept the key on the axial face spline. In a number of variations, the axial face spline may include a groove. In a number of variations, the vane post bore 140 may include an interior key to accept the groove on the axial face spline. In a number of variations, each of the vane post bores 140 in the vane posts 8 may be mechanically coupled to at least one radial face spline of the actuator ring 100. In a number of variations, the actuator ring 100 may be constructed and arranged to operate a plurality of vanes uniformly based on movement of the actuator ring 100. In a number of variations, the movement of the actuator ring 100 that actuates the vanes 7 may be rotational in a clockwise or counterclockwise direction where one direction "opens" the vanes and the other direction "closes" the vanes.

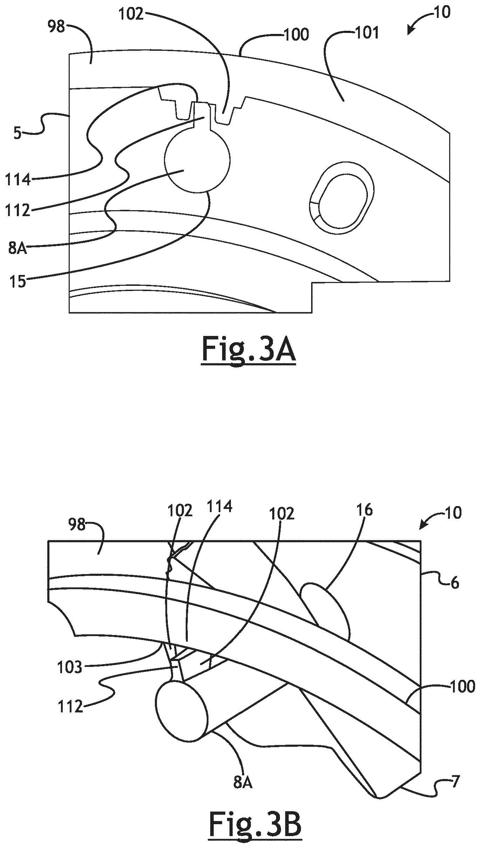

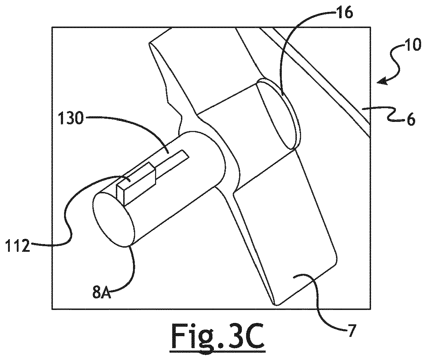

In a number of variations, as shown in FIGs. 3A-3C, the actuator ring 100 may include a groove 114 that may be formed between a plurality of actuator splines 102. In a number of variations, the vane post 8 may include a spline 112 along a longitudinal side of the first end 8A. In a number of variations, the vane post 8 may include a spline 112 along a longitudinal side of the second end 8B. In a number of variations, the vane post 8 may include a spline 112 that may mechanically couple to at least one of the grooves 114 formed in the actuator ring 100. In a number of variations, this may mechanically couple the actuator ring 100 to the vane 7. In a number of variations, movement or rotation of the actuator ring 100 may move or rotate the at least one groove 114 which may in turn move or rotate the spline 112 of the vane post 8 which may move or rotate the vane 7 from an "open" position to a "closed" position and vice versa. In a number of variations, the actuator ring 100 may include a plurality of grooves 114 mechanically coupled to a plurality of splines 112 on individual vane posts 8 such that the actuator ring 100 may be mechanically coupled to a plurality of vanes 7. In a number of variations, each of the splines 112 in the vane posts 8 may be mechanically coupled to at least one groove 114 of the actuator ring 100. In a number of variations, the actuator ring 100 may be constructed and arranged to operate a plurality of vanes uniformly based on movement of the actuator ring 100. In a number of variations, the movement of the actuator ring 100 that actuates the vanes 7 may be rotational. In a number of variations, as shown in Fig. 3C, the first end 8A of the vane post 8 may be an insert which locks into the vane 7 through a key mechanism 130.

It is also noted that any mechanical coupling of the actuator ring 100 and the vane post 8 may be undertaken without departing from the scope of the invention including a vane actuator 98 involving a nut, bolt, fastener, buckle, button, cable tie, clamp, clip, clutch, flange, frog, grommet, latch, nail, peg, pin, hook and loop fastener, rivet, screw anchor, snap fastener, staple, stitch, strap, threaded fastener, tie, toggle bolt, zipper, wedge anchor or may be another type. In a number of variations, the product 10 including any of its components (including the vane actuator 98, vane 7, vane post 8, actuator ring 100, upper ring 5, lower ring 6, or may be another component) may be made of aluminum, cast iron, molded plastic, carbon fiber, other die cast metal, or other suitable material. In a number of variations, the components of the product 10 (including the vane actuator 98, vane 7, vane post 8, actuator ring 100, upper ring 5, lower ring 6, or may be another component) may be secured in the orientations illustrated by staking, casting it in position, machining, assembly, or other suitable means.

In a number of variations, a method 800 is shown. In a number of variations, the method 800 may include in block 802 providing a turbine comprising a lower ring, a upper ring, a plurality of vanes, wherein each of the vanes comprises a vane post mechanically coupling the lower ring and the upper ring to the vane, and a vane actuator comprising an actuator ring constructed and arranged to operate the vanes uniformly based on movement of the actuator ring. In a number of variations, the method 800 may further include, in block 804, actuating the vanes into an open position or a closed position uniformly through movement of the actuator ring.

In a number of variations, product 10 or vane actuator 98 may actuator all of the vanes 8 of the vane cascade 18 uniformly, eliminating the need for individual vane levers for each vane, which may reduce cost of manufacture, assembly, and componentry, as well as reduce complexity of the product 10 or actuation of the vane cascade 18. In a number of variations, the product 10 or vane actuator 98 may lessen or eliminate vane sticking, vane non-actuation, or non-uniform vane cascade 18 actuation in undesirable conditions such as high or non-uniform temperature environments.

## Claims

1. A turbomachinery product (10) comprising:
a turbine (68) comprising a first ring (6), a second ring (5), a plurality of vanes (7) disposed between the first ring (6) and the second ring (5), wherein each of the vanes (7) comprises a vane post (8) mechanically coupling the first ring (6) and the second ring (5) to the vane (7), and a vane actuator (98) comprising an actuator ring (100) constructed and arranged to operate the vanes (7) uniformly based on movement of the actuator ring (100)
**characterized in that**
the actuator ring (100) comprises at least one of a plurality of splines (102) or a plurality of grooves (114) and **in that** each of the vane posts (8) comprises at least one of a groove (104) or a spline (112) that mechanically couples with at least one of at least one spline (102) or at least one groove (114) of the actuator ring (100).

2. The product (10) of claim 1 wherein at least one of the first ring (6) or the second ring (5) comprises a bore (15, 16) that mechanically couples to the vane (7) through the vane post (8).

3. The product (10) of any one of claims 1 or 2 wherein the vane post (8) comprises a bore (140) that mechanically couples with at least one spline (102) of the actuator ring (100).

4. The product (10) of any one of the preceding claims wherein product (10) comprises a turbocharger (1), in particular wherein the turbine (68) has variable turbine geometry.

5. A method comprising:
providing a turbine (68) comprising a first ring (6), a second ring (5), a plurality of vanes (7) disposed between the first ring (6) and the second ring (5), wherein each of the vanes (7) comprises a vane post (8) mechanically coupling the first ring (6) and the second ring (5) to the vane (7), and a vane actuator (98) comprising an actuator ring (100) constructed and arranged to operate the vanes (7) uniformly based on movement of the actuator ring (100); and actuating the vanes (7) into an open position or a closed position uniformly through movement of the actuator ring (100)
**characterized in that**
the actuator ring (100) comprises at least one of a plurality of splines (102) or a plurality of grooves (114) and **in that** each of the vane posts (8) comprises at least one of a groove (104) or a spline (112) that mechanically couples with at least one of at least one spline (102) or at least one groove (114) of the actuator ring (100).

6. The method of claim 5 wherein at least one of the first ring (6) or the second ring (5) comprises a bore (15, 16) that mechanically couples to the vane (7) through the vane post (8).

7. The method of any one of claims 5 or 6 wherein the turbine (68) is part of a turbocharger (1), in particular wherein turbine (68) has variable turbine geometry.

## Patentansprüche

1. Turbomaschinenprodukt (10), umfassend:
eine Turbine (68), die einen ersten Ring (6), einen zweiten Ring (5), eine Vielzahl von Leitschaufeln (7), die zwischen dem ersten Ring (6) und dem zweiten Ring (5) angeordnet sind, umfasst, wobei die Leitschaufeln (7) jeweils einen Leitschaufelstift (8) umfassen, der den ersten Ring (6) und den zweiten Ring (5) mechanisch mit der Leitschaufel (7) koppelt, und einen Leitschaufelantrieb (98), der einen Antriebsring (100) umfasst, der dazu ausgebildet und angeordnet ist, die Leitschaufeln (7) einheitlich auf Grundlage einer Bewegung des Leitschaufelrings (100) zu betätigen,
**dadurch gekennzeichnet, dass**
der Antriebsring (100) wenigstens eine aus einer Vielzahl von Rippen (102) oder einer Vielzahl von Rillen (114) umfasst und dass die Leitschaufelstifte (8) jeweils wenigstens eine Rille (104) oder eine Rippe (112) umfassen, die mit wenigstens einer Rippe (102) und/oder wenigstens einer Rille (114) des Antriebsrings (100) mechanisch gekoppelt ist.

2. Produkt (10) nach Anspruch 1, wobei der erste Ring (6) und/oder der zweite Ring (5) eine Bohrung (15, 16) umfasst, die über den Leitschaufelstift (8) mechanisch mit der Leitschaufel (7) gekoppelt ist.

3. Produkt (10) nach einem der Ansprüche 1 oder 2, wobei der Leitschaufelstift (8) eine Bohrung (140) umfasst, die mit wenigstens einer Rippe (102) des Antriebsrings (100) gekoppelt ist.

4. Produkt (10) nach einem der vorhergehenden Ansprüche, wobei das Produkt (10) einen Turbolader (1) umfasst, wobei die Turbine (68) insbesondere eine variable Turbinengeometrie aufweist.

5. Verfahren, umfassend:
Bereitstellen einer Turbine (68), die einen ersten Ring (6), einen zweiten Ring (5), eine Vielzahl von Leitschaufeln (7), die zwischen dem ersten Ring (6) und dem zweiten Ring (5) angeordnet sind, umfasst, wobei die Leitschaufeln (7) jeweils einen Leitschaufelstift (8) umfassen, der den ersten Ring (6) und den zweiten Ring (5) mechanisch mit der Leitschaufel (7) koppelt, und einen Leitschaufelantrieb (98), der einen Antriebsring (100) umfasst, der dazu ausgelegt und angeordnet ist, die Leitschaufeln (7) einheitlich auf Grundlage einer Bewegung des Antriebsrings (100) zu betätigen, und einheitliches Steuern der Leitschaufeln (7) in eine geöffnete Stellung oder eine geschlossene Stellung durch eine Bewegung des Antriebsrings (100),
**dadurch gekennzeichnet, dass**
der Antriebsring (100) wenigstens eine aus einer Vielzahl von Rippen (102) oder einer Vielzahl von Rillen (114) umfasst und dass die Leitschaufelstifte (8) jeweils wenigstens eine Rille (104) oder eine Rippe (112) umfassen, die mit wenigstens eine Rippe (102) und/oder wenigstens einer Rille (114) des Antriebsrings (100) mechanisch gekoppelt ist.

6. Verfahren nach Anspruch 5, wobei der erste Ring (6) und/oder der zweite Ring (5) eine Bohrung (15, 16) umfasst, die über den Leitschaufelstift (8) mechanisch mit der Leitschaufel (7) gekoppelt ist.

7. Verfahren nach einem der Ansprüche 5 oder 6, wobei die Turbine (68) Teil eines Turboladers (1) ist, wobei die Turbine (68) insbesondere eine variable Turbinengeometrie aufweist.

## Revendications

1. Produit turbomachine (10) comprenant :
une turbine (68) comprenant un premier anneau (6), un second anneau (5), une pluralité de palettes (7) disposées entre le premier anneau (6) et le second anneau (5), chacune des palettes (7) comprenant un support de palette (8) accouplant mécaniquement le premier anneau (6) et le second anneau (5) à la palette (7), et un actionneur à palettes (98) comprenant un anneau d'actionneur (100) conçu et disposé pour actionner les palettes (7) de manière uniforme en fonction du mouvement de l'anneau d'actionneur (100)
**caractérisé en ce que**
l'anneau d'actionneur (100) comprend au moins l'une parmi une pluralité de cannelures (102) et une pluralité de rainures (114) et **en ce que** chacun des supports de palette (8) comprend au moins l'une parmi une rainure (104) et une cannelure (112) qui s'accouple mécaniquement avec au moins une parmi au moins une cannelure (102) et au moins une rainure (114) de l'anneau d'actionneur (100).

2. Produit (10) selon la revendication 1, au moins l'un parmi le premier anneau (6) et le second anneau (5) comprenant un alésage (15, 16) qui s'accouple mécaniquement à la palette (7) à travers le support de palette (8).

3. Produit (10) selon la revendication 1 ou 2, le support de palette (8) comprenant un alésage (140) qui s'accouple mécaniquement avec au moins une cannelure (102) de l'anneau d'actionneur (100).

4. Produit (10) selon l'une quelconque des revendications précédentes, le produit (10) comprenant un turbocompresseur (1), en particulier la turbine (68) ayant une géométrie de turbine variable.

5. Procédé comprenant les étapes consistant à :
fournir une turbine (68) comprenant un premier anneau (6), un second anneau (5), une pluralité de palettes (7) disposées entre le premier anneau (6) et le second anneau (5), chacune des palettes (7) comprenant un support de palette (8) accouplant mécaniquement le premier anneau (6) et le second anneau (5) à la palette (7), et un actionneur à palettes (98) comprenant un anneau d'actionneur (100) conçu et disposé pour actionner les palettes (7) de manière uniforme en fonction du mouvement de l'anneau d'actionneur (100) ; et actionner les palettes (7) dans une position ouverte ou une position fermée de manière uniforme par l'intermédiaire du mouvement de l'anneau d'actionneur (100)
**caractérisé en ce que**
l'anneau d'actionneur (100) comprend au moins l'une parmi une pluralité de cannelures (102) et une pluralité de rainures (114) et **en ce que** chacun des supports de palette (8) comprend au moins l'une parmi une rainure (104) et une cannelure (112) qui s'accouple mécaniquement avec au moins une parmi au moins une cannelure (102) et au moins une rainure (114) de l'anneau d'actionneur (100).

6. Procédé selon la revendication 5, au moins l'un parmi le premier anneau (6) et le second anneau (5) comprenant un alésage (15, 16) qui s'accouple mécaniquement à la palette (7) par l'intermédiaire du support de palette (8).

7. Procédé selon la revendication 5 ou 6, la turbine (68) faisant partie d'un turbocompresseur (1), en particulier la turbine (68) ayant une géométrie de turbine variable.
